# EUROPÄISCHE PATENTSCHRIFT

(11) **EP 3 765 309 B1**
(45) Veröffentlichungstag und Bekanntmachung des Hinweises auf die Patenterteilung: **06.04.2022**
(21) Anmeldenummer: 19705474.5
(22) Anmeldetag: 11.02.2019
(51) Int. Cl.: B60B 27/02

(54) **RADNABE FÜR EIN FAHRZEUG**
WHEEL HUB FOR VEHICLE
MOYEU DE ROUE POUR VÉHICULE

(30) Priorität: 16.03.2018 DE 102018204095
(43) Veröffentlichungstag der Anmeldung: 20.01.2021
(73) Patentinhaber: AUDI AG, 85045 Ingolstadt (DE)
(72) Erfinder: ALBL, Johannes, 85055 Ingolstadt (DE); FRISCH, Michael, 94513 Schönberg (DE)
(86) Internationale Anmeldenummer: PCT/EP2019/053266
(87) Internationale Veröffentlichungsnummer: WO 2019/174833

(56) Entgegenhaltungen:
- EP-A1- 0 834 670
- EP-A1- 3 170 678
- WO-A1-2014/019737
- DE-A1-102009 015 950
- DE-U1-202010 009 776
- US-A- 2 781 231

## Beschreibung

Die Erfindung betrifft eine Radnabe für ein Fahrzeug, insbesondere für einen Kraftwagen, gemäß dem Oberbegriff von Patentanspruch 1. Ferner betrifft die Erfindung eine Radlagereinheit und ein Fahrzeug, insbesondere einen Kraftwagen.

Eine solche Radnabe für ein beispielsweise als Kraftfahrzeug, insbesondere als Kraftwagen, ausgebildetes Fahrzeug ist bereits der DE 10 2009 015 950 A1 als bekannt zu entnehmen. Die Radnabe wird genutzt, um wenigstens ein Rad des Fahrzeugs, insbesondere an einem Radträger, um eine Drehachse drehbar beziehungsweise drehend zu lagern. Die Radnabe weist hierzu einen Flansch auf, welcher wenigstens ein Befestigungselement aufweist. Mittels des Befestigungselements ist eine Felge des Rads zumindest in axialer Richtung der Radnabe an dem Flansch und dadurch an der Radnabe befestigbar ist. Insbesondere kann die Felge mittels des Befestigungselements auch drehfest mit dem Flansch und somit mit der Radnabe verbunden werden, sodass beispielsweise Drehmomente zwischen der Radnabe und der Felge beziehungsweise dem Rad insgesamt übertragen werden können. Die Radnabe weist darüber hinaus einen axial von dem Flansch abstehenden Fortsatz auf, an welchem ein Zentriersitz der Radnabe ausgebildet ist. Der Zentriersitz weist mehrere, in Umfangsrichtung der Radnabe aufeinander folgend angeordnete und voneinander beabstandete sowie in radialer Richtung der Radnabe nach außen weisende Zentrierflächensegmente aufweist, mittels welchen die Felge in radialer Richtung der Radnabe relativ zu dieser zu zentrieren ist. Hierzu sind die Zentrierflächensegmente, insbesondere in radialer Richtung der Radnabe, an der Felge abstützbar beziehungsweise umgekehrt. Wird beispielsweise die Felge auf der Radnabe angeordnet, indem die Felge in radialer Richtung der Radnabe in Stützanlage mit den Zentrierflächensegmenten angeordnet wird, so wird dadurch die Felge in radialer Richtung der Radnabe relativ zu dieser mittels der Zentrierflächensegmente zentriert.

Des Weiteren offenbart die DE 102 60 467 A1 eine Radlagerungs- und Bremsscheibeneinheit, bestehend aus einem Wälzlager mit angeordnetem Flansch, der erste Befestigungsöffnungen zur Befestigung der Felge als auch des topfförmigen Befestigungsteils der Bremsscheibe enthält. Außerdem ist aus der EP 2 221 194 A1 eine Radlagereinrichtung bekannt.

Die DE 10 2012 213 527 A1 offenbart des Weiteren eine Radnabe, mit einem sich in radialer Richtung erstreckenden und eine Befestigungsfläche aufweisenden Radflansch, mit einem sich axial fahrzeugseitig vom Radflansch erstreckenden zylindrischen Fortsatz zur zumindest teilweisen Aufnahme eines Wälzlagers, und mit einer axial radseitig, konzentrisch zur Rotationsachse der Radnabe angeordneten Zentriervorrichtung, die zur Aufnahme einer Radfelge oder Bremsscheibe vorgesehen ist.

Außerdem ist aus der US 2,781,231 A eine Radnabe bekannt, welche ein paar voneinander beabstandeter, zylindrischer Lagerringe aufweist. Außerdem offenbart die DE 20 2010 009 776 U1 eine Nabe für ein Gelände-Motorrad.

Aufgabe der vorliegenden Erfindung ist es, eine Radnabe, eine Radlagereinheit und ein Fahrzeug der eingangs genannten Art derart weiterzuentwickeln, dass einerseits eine besonders hohe Festigkeit und eine besonders hohe Dauerhaltbarkeit der Radnabe und andererseits ein möglichst geringes Gewicht der Radnabe realisiert werden können, sowie dass Korrosion aufgrund des Ansammelns von Wasser im Bereich der Radmitte besonders gering gehalten werden kann.

Diese Aufgabe wird erfindungsgemäß durch eine Radnabe mit den Merkmalen des Patentanspruchs 1, durch eine Radlagereinheit mit den Merkmalen des Patentanspruchs 8 sowie durch ein Fahrzeug mit den Merkmalen des Patentanspruchs 9 gelöst. Vorteilhafte Ausgestaltungen mit zweckmäßigen Weiterbildungen der Erfindung sind in den übrigen Ansprüchen angegeben. Ein erster Aspekt der Erfindung betrifft eine Radnabe für ein Fahrzeug, welches vorzugsweise als Kraftfahrzeug und dabei insbesondere als Kraftwagen, vorzugsweise als Personenkraftwagen, ausgebildet ist. Die Radnabe ist beispielsweise über wenigstens ein insbesondere als Wälzlager ausgebildetes Radlager drehbar an einem Radträger des Fahrzeug zu lagern und somit in vollständig hergestelltem Zustand des Fahrzeugs um eine Drehachse, insbesondere relativ zu dem Radträger, drehbar. Im vollständig hergestellten Zustand des Fahrzeugs nimmt die Radnabe ihre Einbaulage ein. Die Radnabe wird dabei zur drehbaren beziehungsweise drehenden Lagerung wenigstens eines Rads des Fahrzeugs genutzt, sodass beispielsweise im vollständig hergestellten Zustand des Fahrzeugs das Rad über Radnabe an dem Radträger um die Drehachse relativ zu dem Radträger drehbar gelagert ist.

Die Radnabe weist einen Flansch mit wenigstens einem Befestigungselement auf. Der Flansch kann wenigstens ein oder mehrere weitere Befestigungselemente aufweisen, wobei die Befestigungselemente beispielsweise in Umfangsrichtung der Radnabe und somit des Flansches aufeinanderfolgend beziehungsweise hintereinander angeordnet sind. Insbesondere sind die Befestigungselemente beispielsweise in Umfangsrichtung der Radnabe und somit des Flansches gleichmäßig verteilt angeordnet. Die vorigen und folgenden Ausführungen zu dem jeweiligen Befestigungselement können ohne weiteres auch auf die jeweils anderen Befestigungselemente übertragen werden und umgekehrt. Mittels des Befestigungselements ist eine Felge des Rads des Fahrzeugs zumindest in axialer Richtung der Radnabe an dem Flansch und dadurch an der Radnabe befestigbar. Insbesondere kann die Felge in axialer Richtung der Radnabe zumindest mittelbar, insbesondere direkt, an dem Flansch abgestützt werden. Üblicherweise ist die Felge in axialer Richtung über eine Bremsscheibe an dem Flansch abstützbar und somit über die Bremsscheibe gegen Flansch spannbar, sodass beispielsweise im vollständig hergestellten Zustand des Fahrzeugs die Bremsscheibe in axialer Richtung zwischen der Felge und dem Flansch angeordnet ist. Dann ist beispielsweise die Felge in axialer Richtung über die Bremsschiebe an dem Flansch abgestützt und gegen diese gespannt. Beispielsweise kann die Felge mittels des Befestigungselements in axialer Richtung der Radnabe zumindest mittelbar, insbesondere direkt, gegen den Flansch und somit gegen die Radnabe gespannt werden, um dadurch die Felge zumindest in axialer Richtung an der Radnabe zu sichern. Dadurch können zumindest in axialer Richtung verlaufende Relativbewegungen zwischen der Radnabe und der Felge vermieden werden. Ferner ist es denkbar, dass die Felge mittels des Flansches, insbesondere mittels des Befestigungselements, drehfest mit dem Flansch und somit drehfest mit der Radnabe verbunden werden kann, um dadurch Relativdrehungen zwischen der Felge und der Radnabe zu vermeiden beziehungsweise um Drehmomente zwischen der Felge und der Radnabe übertragen zu können. Insbesondere ist es denkbar, dass die Felge mittels des Befestigungselements reib- beziehungsweise kraftschlüssig an dem Flansch und somit an der Radnabe befestigbar ist.

Die Radnabe weist darüber hinaus einen axial, das heißt in axialer Richtung der Drehachse von dem Flansch abstehenden Fortsatz auf, an welchem ein Zentriersitz der Radnabe ausgebildet ist. Der Zentriersitz weist mehrere, in Umfangsrichtung der Radnabe aufeinander folgend angeordnete und voneinander beabstandete sowie in radialer Richtung der Radnabe nach außen weisende Zentrierflächensegmente auf, mittels welchen die Felge in radialer Richtung der Radnabe relativ zu der Radnabe, insbesondere bezüglich der Drehachse, zu zentrieren ist. Der Zentriersitz ist, beziehungsweise die Zentrierflächensegmente sind beispielsweise in radialer Richtung der Radnabe innerhalb des Befestigungselements, das heißt weiter innen als das Befestigungselement, angeordnet ist. Mit anderen Worten ist beispielsweise das Befestigungselement in radialer Richtung der Radnabe weiter außen als der Zentriersitz beziehungsweise als die Zentrierflächensegmente angeordnet. Die Zentrierflächensegmente sind vorzugsweise auf demselben Durchmesser angeordnet, insbesondere bezüglich der Drehachse.

Die Zentrierflächensegmente sind beispielsweise in radialer Richtung an der Felge, insbesondere an einer Nabe der Felge, abstützbar. Da die Zentrierflächensegmente in radialer Richtung nach außen weisen, sind die Zentrierflächensegmente in radialer Richtung an einer innenumfangsseitigen Mantelfläche der Felge, insbesondere der Nabe der Felge, abstützbar. Um die Felge an der Radnabe zu befestigen, wird die Felge zumindest teilweise auf der Radnabe, insbesondere auf dem Zentriersitz, angeordnet, insbesondere derart, dass der Zentriersitz und somit die Zentrierflächensegmente in der Nabe der Felge angeordnet werden. Dabei wird die Felge an den Zentrierflächensegmenten abgestützt, wodurch die Felge in radialer Richtung der Radnabe relativ zu der Radnabe zentriert wird. Durch diese Zentrierung ist die Felge beispielsweise koaxial zu der Drehachse und koaxial zu der Radnabe angeordnet, sodass ein ruhiger Lauf der Felge und somit des Rads insgesamt gewährleistet werden kann.

Um nun einerseits eine besonders hohe Festigkeit und eine besonders hohe Dauerhaltbarkeit und andererseits ein möglichst geringes Gewicht der Radnabe realisieren zu können, ist es erfindungsgemäß vorgesehen, dass der einstückige Fortsatz eine in Umfangsrichtung durchgängige, das heißt in Umfangsrichtung vollständig unterbrechungsfrei umlaufende und in radialer Richtung nach innen weisende Mantelinnenfläche aufweist.

Wie oben schon angemerkt, ist ein durchgängiger Zentriersitz, der in Umfangsrichtung auf demselben Durchmesser vollständig beziehungsweise durchgängig umläuft, Standard. Zur Gewichtsreduzierung und für den Wasserablauf wird der einfach auch als Sitz bezeichnete Zentriersitzt segmentiert, und zwar im Stand der Technik durch eine axiale Einrückung beziehungsweise eine sogenannte Kronenform. Diese axiale Einrückung beziehungsweise Segmentierung führt jedoch zu dem Nachteil, dass die Steifigkeit und Festigkeit der Radnabe leiden. Erfindungsgemäß wird daher keine axiale Segmentierung, sondern eine radiale Segmentierung des Zentriersitzes vorgeschlagen, um weiterhin den Wasserablauf zu gewährleisten, sodass ein Festrosten des Rads vermieden werden kann, jedoch den Festigkeitsvorteil des durchgehenden, beispielsweise als Rohr ausgebildeten Fortsatzes zu erhalten.

Ferner weist der an sich einstückig ausgebildete und vorzugsweise einstückig mit dem Flansch ausgebildeten Fortsatz eine in radialer Richtung nach außen weisende Mantelaußenfläche auf, welche die Zentrierflächensegmente bildet. Dies bedeutet, dass die Zentrierflächensegmente erste Teile oder erste Teilbereiche der Mantelaußenfläche sind. Die Mantelaußenfläche ist dabei derart gestaltet beziehungsweise ausgebildet, dass die Zentrierflächensegmente einen ersten radialen, das heißt in radialer Richtung der Radnabe verlaufenden Abstand zur Drehachse aufweisen. Des Weiteren weist die Mantelaußenfläche weitere Flächensegmente auf, welche in Umfangsrichtung zwischen den Zentrierflächensegmenten angeordnet sind und einen gegenüber dem ersten radialen Abstand geringeren zweiten radialen, das heißt in radialer Richtung der Radnabe verlaufenden Abstand zur Drehachse aufweisen. Dies bedeutet, dass die weiteren Flächensegmente zweite Teile beziehungsweise zweite Teilbereiche der Mantelaußenfläche sind, wobei die zweiten Teile in radialer Richtung weiter innen angeordnet sind als die ersten Teile. Da die weiteren Flächensegmente zwischen den Zentrierflächensegmenten angeordnet sind, ist beispielsweise zwischen jeweils zwei in Umfangsrichtung der Radnabe unmittelbar beziehungsweise direkt aufeinanderfolgenden der Zentrierflächensegmenten genau einer der weiteren Flächensegmente angeordnet.

Vorzugsweise gehen die weiteren Flächensegmente unterbrechungsfrei in die Zentrierflächensegmente über beziehungsweise umgekehrt, sodass vorzugsweise auch die Mantelaußenfläche in Umfangsrichtung durchgängig ist, das heißt vollständig geschlossen umläuft. Insbesondere durch die in Umfangsrichtung unterbrechungsfreie Mantelinnenfläche können eine besonders hohe Festigkeit und Dauerhaltbarkeit realisiert werden. Da dabei gleichzeitig die Zentrierflächensegmente in Umfangsrichtung voneinander beabstandet sind, ist der Zentriersitz, insbesondere in Umfangsrichtung, segmentiert, sodass das Gewicht der Radnabe besonders gering gehalten werden kann und ein Wasserablauf und somit ein verbesserter Korrosionsschutz gegeben sind. Die Zentrierflächensegmente bilden in Summe eine Zentriergesamtfläche, welche durch die in Umfangsrichtung der Radnabe verlaufende Segmentierung des Zentriersitzes aufgeteilt und dabei in die einzelnen Zentrierflächensegmente unterteilt ist. Während die Zentrierflächensegmente für die Zentrierung der Felge sorgen, tragen die weiteren Flächensegmente nicht zur Zentrierung der Felge bei. Während somit die Zentrierflächensegmente zum Zentriersitz gehören, sind die weiteren Flächensegmente von dem Zentriersitz, insbesondere hinsichtlich dessen Funktion, unterschiedliche Bereiche, welche beispielsweise von der Felge zumindest in radialer Richtung beabstandet sind, insbesondere wenn die Felge auf dem Zentriersitz angeordnet ist beziehungsweise sitzt.

Durch die radiale Segmentierung des Zentriersitzes kann die Radnabe im Gegensatz zu einer axialen Segmentierung mit einem geringeren Fertigungsaufwand, insbesondere mit reduzierten Schmiedekräften und reduziertem Verschleiß bei der spanenden Bearbeitung, hergestellt werden. Da trotz der Segmentierung die Mantelinnenfläche als durchgängige, unterbrechungsfreie Mantelfläche physikalisch vorhanden ist und in Umfangsrichtung vollständig geschlossen umläuft, weist die Radnabe insbesondere gegenüber aus dem Stand der Technik bekannten Lösungen, bei denen zwischen den Zentrierflächensegmenten Lücken beziehungsweise Unterbrechungen vorgesehen sind, eine wesentlich höhere Festigkeit und Dauerhaltbarkeit auf.

Die zuvor beschriebene Segmentierung des Zentriersitzes wird auch als radiale Segmentierung oder als Segmentierung in radialer Richtung bezeichnet und erlaubt beispielsweise, dass sich innerhalb des auch als Felgensitz bezeichneten Zentriersitzes ansammelndes Wasser ablaufen kann, insbesondere auf einer Seite, welche von äußeren Betrachtern des Fahrzeugs nicht optisch wahrgenommen werden kann. Dadurch kann verhindert werden, dass das Wasser an einer sogenannten, von äußeren Betrachtern des Fahrzeugs optisch wahrnehmbaren Designseite austritt und das Aussehen der Felge nachteilig beeinflusst. Durch die radiale Segmentierung in Kombination mit der Bildung der vollständig geschlossen umlaufenden Mantelinnenfläche kann eine geschlossene Form des Zentriersitzes beziehungsweise des Fortsatzes realisiert werden, wodurch eine besonders hohe Steifigkeit und Festigkeit der Radnabe, insbesondere des Flansches, realisiert werden können. Ferner erlaubt die radiale Segmentierung die Montage einer Schutzkappe innerhalb des beispielsweise auch als Felgensitz oder Radsitz bezeichneten Zentriersitzes, um beispielsweise einen Innenbereich des Flansches vor Korrosion schützen zu können beziehungsweise um Korrosion hinter der Schutzkappe zu verbergen. Hierdurch kann der besonders vorteilhafte optische Eindruck des Fahrzeugs insgesamt gewährleistet werden.

Die radiale Segmentierung bietet darüber hinaus Vorteile in der Bearbeitung. Durch die zuvor beschriebene geschlossene Form kann beispielsweise der Fortsatz als geschlossenes Profil ausgebildet werden, wodurch ein Wegfedern von Türmen und dadurch eine Sägezahnbildung bei der spanenden Bearbeitung verhindert werden können. Dadurch kann eine höhere Genauigkeit hinsichtlich der Zentrierung der Felge und somit des Rads insgesamt gewährleistet werden.

Der zuvor genannte, den Zentrierflächensegmenten gemeinsame Durchmesser, auf welchen die Zentrierflächensegmenten beispielsweise angeordnet sind, wird auch als erster Durchmesser bezeichnet und korrespondiert beispielsweise, insbesondere bezüglich der Drehachse, mit einem ersten Radius. Somit sind die Zentrierflächensegmenten beispielsweise auf dem ersten Radius angeordnet. Der erste Radius ist vorzugsweise ein erster Außenradius, sodass der erste Durchmesser vorzugsweise ein erster Außendurchmesser ist.

Die Radnabe weist beispielsweise einen gegenüber dem ersten Durchmesser geringeren zweiten Durchmesser auf, welcher beispielsweise, insbesondere bezüglich der Drehachse, mit einem zweiten Radius korrespondiert. Der zweite Radius ist beispielsweise ein Innenradius, sodass der zweite Durchmesser vorzugsweise ein Innendurchmesser ist. Vorzugsweise ist der zweite Durchmesser, insbesondere bezüglich der Drehachse, koaxial zu dem ersten Durchmesser angeordnet, wobei der zweite Durchmesser beispielsweise geringer als der erste Durchmesser ist. Dabei ist beispielsweise die Mantelinnenfläche zumindest teilweise, insbesondere zumindest überwiegend oder vollständig, auf dem zweiten Durchmesser angeordnet, insbesondere dann, wenn die Mantelinnenfläche zylindrisch beziehungsweise kreisförmig ausgebildet ist. Die Mantelinnenfläche könnte jedoch alternativ eine von einem Zylinder unterschiedliche Form aufweisen und beispielsweise elliptisch ausgebildet sein. Die Mantelinnenfläche bildet oder begrenzt beispielsweise einen, insbesondere geschlossenen, Hohlquerschnitt der Radnabe. Der Hohlquerschnitt ist beispielsweise ein auch als Nabe bezeichnetes Nabenelement der Radnabe, wobei das Nabenelement beziehungsweise der Hohlquerschnitt vorzugsweise in Umfangsrichtung vollständig umlaufend geschlossen ist. Hierdurch kann eine besonders hohe Festigkeit und Dauerhaltbarkeit gewährleistet werden.

Des Weiteren weist die Radnabe beispielsweise einen dritten Durchmesser auf, welcher, insbesondere bezüglich der Drehachse, mit einem dritten Radius korrespondieren kann. Der dritte Radius ist beispielsweise ein zweiter Außenradius, sodass der dritte Durchmesser beziehungsweise ein zweiter Außendurchmesser ist. Vorzugsweise ist der dritte Durchmesser größer als der zweite Durchmesser und geringer als der erste Durchmesser. Dabei sind beispielsweise die weiteren Flächensegmente auf dem dritten Radius beziehungsweise auf dem dritten Durchmesser angeordnet. Hierunter ist insbesondere dann, wenn die weiteren Flächensegmente eben beziehungsweise flach ausgebildet sind, zu verstehen, dass jeweilige Tangenten an die jeweiligen weiteren Flächensegmente Tangenten des dritten Durchmessers beziehungsweise eines den dritten Durchmesser aufweisenden Kreises sind, wobei der dritte Durchmesser beziehungsweise der Kreis, insbesondere bezüglich der Drehachse, koaxial zu dem ersten Durchmesser und zu dem zweiten Durchmesser angeordnet ist. Durch diese Ausgestaltung und Anordnung der Durchmesser kann die zuvor genannte geschlossene Form beziehungsweise das zuvor genannte geschlossene Profil realisiert werden, sodass eine besonders hohe Festigkeit und Dauerhaltbarkeit und andererseits ein besonders geringes Gewicht der Radnabe realisiert werden können.

Der Fortsatz erstreckt sich vorzugsweise in axialer Richtung vollständig durchgehend von dem Flansch weg und läuft in Umfangsrichtung vollständig geschlossen um, sodass eine besonders hohe Dauerfestigkeit und Dauerhaltbarkeit realisiert werden können. Somit ist der Fortsatz beispielsweise als des zuvor genannte geschlossene Profil ausgebildet, wobei der Fortsatz beispielsweise die Durchmesser bildet beziehungsweise aufweist.

Des Weiteren ist es vorgesehen, dass die weiteren Flächensegmente der Mantelaußenfläche eben ausgebildet und gegenüber den Zentrierflächensegmenten, insbesondere radial näher zur Drehachse, das heißt in radialer Richtung nach innen hin, zurückversetzt sind. Hierdurch können auf kostengünstige Weise eine besonders hohe Festigkeit und Dauerhaltbarkeit sowie gleichzeitig die radiale Segmentierung des Zentriersitzes realisiert werden. Unter dem Merkmal, dass die weiteren Flächensegmente in radialer Richtung nach innen gegenüber den Zentrierflächensegmenten zurückverssetzt sind, ist zu verstehen, dass beispielsweise die Zentrierflächensegmente in radialer Richtung weiter außen als die weiteren Flächensegmente angeordnet sind, sodass beispielsweise Bezug nehmend auf die zuvor beschriebenen Durchmesser der erste Durchmesser größer als der dritte Durchmesser ist.

Als besonders vorteilhaft hat es sich gezeigt, wenn sich die in Umfangsrichtung durchgängige Mantelinnenfläche in axialer Richtung von dem Flansch durchgängig bis zu einem dem Flansch in axialer Richtung gegenüberliegenden Ende des Fortsatzes erstreckt, welcher an dem genannten Ende in axialer Richtung endet. Hierdurch können eine besonders hohe Festigkeit und Dauerhaltbarkeit der Radnabe auf gewichtsgünstige Weise dargestellt werden.

In weiterer Ausgestaltung der Erfindung endet der Fortsatz in axialer Richtung auf einer dem Flansch gegenüberliegenden Seite an einer Stirnfläche, wobei die Stirnfläche auch als Gesamtstirnfläche des Fortsatzes bezeichnet wird und beispielsweise an dem zuvor genannten Ende angeordnet ist.

Die Zentrierflächensegmente enden beispielsweise in axialer Richtung an jeweiligen, an dem Ende angeordneten ersten Teilstirnflächen des Fortsatzes, wobei die weiteren Flächensegmente beispielsweise in axialer Richtung an jeweiligen, an dem Ende angeordneten zweiten Teilstirnflächen des Fortsatzes enden. Die Teilstirnflächen sind jeweilige Teile der Gesamtstirnfläche und bilden in Summe die Gesamtstirnfläche. Die ersten Teilstirnflächen können in axialer Richtung auf derselben Höhe wie die zweiten Teilstirnflächen angeordnet sein, oder die ersten Teilstirnflächen sind in axialer Richtung gegenüber den zweiten Teilstirnflächen zurückversetzt oder umgekehrt. Die Gesamtstirnfläche ist dabei vorzugsweise in Umfangsrichtung der Radnabe durchgängig, das heißt unterbrechungsfrei umlaufend ausgebildet. Mit anderen Worten ist die zuvor genannte Stirnfläche vorzugsweise eine in Umfangsrichtung vollständig geschlossen beziehungsweise unterbrechungsfrei umlaufende Gesamtstirnfläche der Radnabe. Sind beispielsweise die Teilstirnflächen auf derselben axialen Höhe angeordnet, so läuft die Gesamtstirnfläche auf der Höhe, auf welcher die axialen Teilstirnflächen angeordnet sind, in Umfangsrichtung der Radnabe vollständig geschlossen um.

Die Gesamtstirnfläche ist beispielsweise zumindest im Wesentlichen ringförmig ausgebildet, sodass die Gesamtstirnfläche beispielsweise als eine Ringfläche ausgebildet ist, die in Umfangsrichtung der Radnabe vollständig geschlossen ist beziehungsweise vollständig geschlossen umläuft. Da trotz der Segmentierung die Gesamtstirnfläche beispielsweise als Ringabschnitt physikalisch vorhanden ist und in Umfangsrichtung vollständig geschlossen umläuft, weist die Radnabe insbesondere gegenüber aus dem Stand der Technik bekannte Lösungen mit axialer Segmentierung eine wesentlich höhere Festigkeit und Dauerhaltbarkeit auf.

Um dabei die Kosten der Radnabe besonders gering halten zu können, ist es in weiterer Ausgestaltung der Erfindung vorgesehen, dass die Stirnfläche eben ausgebildet ist und sich in einer schräg oder senkrecht zur axialen Richtung verlaufenden Ebene erstreckt. Die axiale Richtung fällt beispielsweise mit der Drehachse zusammen. Alternativ ist es möglich, dass die Stirnfläche uneben, beispielsweise gewellt ausgebildet ist.

Eine weitere Ausführungsform zeichnet sich dadurch aus, dass die weiteren Flächensegmente durch mechanisches Bearbeiten, insbesondere Fräsen, gebildet und zurückversetzt sind. Die Segmentierung wird somit beispielsweise durch Materialwegnahme gebildet.

Eine weitere Möglichkeit, die Radnabe besonders gewichts- und kostengünstig herstellen zu können, ist, dass die weiteren Flächensegmente durch Urformen und somit beispielsweise durch Gießen oder Schmieden gebildet und zurückversetzt sind. Somit ist die Segmentierung beispielsweise durch Auslassen von Material, aus welchem die Radnabe hergestellt ist, gebildet.

Vorzugsweise ist die Radnabe einstückig ausgebildet, sodass die Teileanzahl, die Kosten und das Gewicht der Radnabe besonders gering gehalten werden können. Weiterhin vorzugsweise ist es vorgesehen, dass die Radnabe durch Schmieden hergestellt ist, sodass beispielsweise die Mantelflächen durch Schmieden gebildet und zurückversetzt sind.

Um eine besonders hohe Robustheit und Stabilität der Radnabe zu realisieren, ist es in weiterer Ausgestaltung der Erfindung vorgesehen, dass eines der Zentrierflächensegmente in Umfangsrichtung auf derselben Höhe wie das Befestigungselement angeordnet ist. Mit anderen Worten ist beispielsweise in radialer Richtung unterhalb des jeweiligen Befestigungselements ein jeweiliges der Zentrierflächensegmente angeordnet, sodass beispielsweise die Befestigungselemente und die Zentrierflächensegmente in Umfangsrichtung der Radnabe nicht versetzt zueinander, sondern auf gleicher Höhe angeordnet sind.

Weiterhin ist es denkbar, dass die Zentrierflächensegmente in Umfangsrichtung versetzt zu dem Befestigungselement beziehungsweise zu den Befestigungselementen angeordnet sind. Somit ist beispielsweise die radiale Segmentierung an oder zwischen den Befestigungselementen angeordnet beziehungsweise ausgerichtet.

Das jeweilige Befestigungselement ist vorzugsweise als eine Öffnung, insbesondere als eine Durchgangsöffnung, ausgebildet, wobei die jeweilige Öffnung insbesondere als Bohrung ausgebildet sein kann. Die insbesondere als Bohrung ausgebildete Öffnung ist beispielsweise eine Radschraubenöffnung, insbesondere eine Radschraubenbohrung, oder eine Radbolzenöffnung, insbesondere eine Radbolzenbohrung, sodass beispielsweise eine Radschraube beziehungsweise ein Radbolzen in die jeweilige Öffnung eingesteckt, insbesondere durch die jeweilige Öffnung hindurch gesteckt, werden kann. Mittels der jeweiligen Radschraube beziehungsweise des jeweiligen Radbolzens kann beispielsweise die Felge durch Schrauben an dem Flansch befestigt und, zumindest mittelbar und dabei beispielswese über die oben genannte Bremsscheibe, gegen den Flansch gespannt werden. Alternativ wären an der Radnabe festgelegte, insbesondere in die Radnabe eingepresste, Radbolzen denkbar, welche auch als Stehbolzen bezeichnet werden. Die Radbolzen weisen beispielsweise eine Gewinde, insbesondere ein Außengewinde, auf, auf das eine jeweilige Radmutter aufgeschraubt werden kann. Eine Verschraubung der Felge beziehungsweise des Rads erfolgt dann über Radmuttern und die Radbolzen, sodass die Felge mittels der Radmuttern zumindest mittelbar gegen den Flansch gespannt wird.

Ein dritter Aspekt der Erfindung betrifft eine Radlagereinheit, mit einer erfindungsgemäßen, in die Radlagereinheit integrierten Radnabe gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft ein Fahrzeug, welches vorzugsweise als Kraftfahrzeug und dabei insbesondere als Kraftwagen wie beispielsweise ein Personenkraftwagen, ausgebildet ist. Das Fahrzeug umfasst insbesondere eine erfindungsgemäße Radnabe gemäß dem ersten Aspekt der Erfindung und/oder eine Radlagereinheit gemäß dem zweiten Aspekt der Erfindung. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt. Insbesondere ist es bei dem zweiten Aspekt der Erfindung vorgesehen, dass die Felge auf die beschriebene Weise an der Radnabe befestigt ist, wobei die Radnabe vorzugsweise drehbar an dem genannten Radträger gelagert ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht eines Fertigteils in Form einer erfindungsgemäßen Radnabe für ein Fahrzeug; und
- Fig. 2: eine schematische Perspektivansicht eines Rohteils, aus welchem beispielsweise die Radnabe gemäß Fig. 1 hergestellt werden kann.

In den Fig. sind gleiche oder funktionsgleiche Elemente mit gleichen Bezugszeichen versehen.

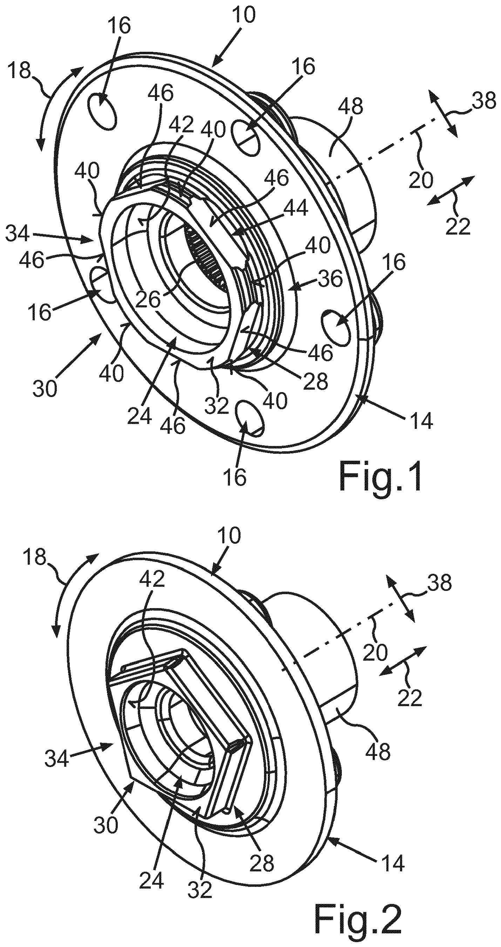

Fig. 1 zeigt in einer schematischen Perspektivansicht ein Fertigteil in Form einer Radnabe 10 für ein Fahrzeug, welches vorzugsweise als Kraftfahrzeug und dabei insbesondere als Kraftwagen, vorzugsweise als Personenkraftwagen, ausgebildet ist. Fig. 2 zeigt ein beispielsweise zumindest durch Schmieden hergestelltes Rohteil 12, aus welchem die Radnabe 10 hergestellt werden kann. Um beispielsweise die Radnabe 10 aus dem Rohteil 12 herzustellen, wird das Rohteil 12 bearbeitet, insbesondere mechanisch bearbeitet. Die Radnabe 10 weist einen Flansch 14 auf, welcher eine Mehrzahl von Befestigungselementen 16 aufweist. Die Befestigungselemente 16 sind als Öffnungen, insbesondere als Durchgangsöffnungen, ausgebildet, wobei das jeweilige Befestigungselement 16 als eine Bohrung ausgebildet sein kann. Die Befestigungselemente 16 sind in Umfangsrichtung der Radnabe 10 und somit des Flansches 14 aufeinanderfolgend angeordnet und voneinander beabstandet, wobei die Befestigungselemente 16 in Umfangsrichtung der Radnabe 10 und somit des Flansches 14 gleichmäßig verteilt angeordnet sind. Die Umfangsrichtung ist in Fig. 1 durch einen Doppelpfeil 18 veranschaulicht und verläuft um eine in Fig. 1 besonders schematisch dargestellte Drehachse 20. In vollständig hergestelltem Zustand ist die Radnabe 10 an einem korrespondierenden Radträger des Fahrzeugs drehbar gelagert, sodass sich die Radnabe 10 um die Drehachse 20 relativ zu dem Radträger drehen kann. Insbesondere ist die Radnabe 10 über wenigstens ein beispielsweise als Wälzlager ausgebildetes Radlager drehbar an dem Radträger gelagert. Die Radnabe 10 ist vorzugsweise einstückig ausgebildet.

Mittels der Befestigungselemente 16 und somit mittels des Flansches 14 kann eine in den Fig. nicht dargestellte Felge eines Rads des Fahrzeugs zumindest in axialer Richtung der Radnabe 10 an der Radnabe 10 befestigt werden. Die axiale Richtung der Radnabe 10 ist in Fig. 1 durch einen Doppelpfeil 22 veranschaulicht und fällt mit der Drehachse 20 zusammen. Um die Felge und somit das Rad insgesamt mit dem Flansch 14 und dadurch mit der Radnabe 10 zu verbinden, wird die Felge auf der Radnabe 10 angeordnet, derart, dass Durchgangsöffnungen der Felge in Überlappung beziehungsweise in Überdeckung mit den Befestigungselementen 16 angeordnet werden. Dann werden beispielsweise weitere Befestigungselemente insbesondere in Form von Schrauben durch die Durchgangsöffnungen der Felge hindurch gesteckt und beispielsweise in die Befestigungselemente 16 eingesteckt. Insbesondere werden die als Radschrauben oder Radbolzen ausgebildeten Schraubelemente in die korrespondierenden Öffnungen der Befestigungselemente 16 eingeschraubt, wodurch die Felge gegen den Flansch 14 gespannt wird. Hierdurch wird die Felge in axialer Richtung der Radnabe 10 an dieser gesichert. Außerdem werden die Felge und somit das Rad insgesamt drehfest mit der Radnabe 10 verbunden, sodass Drehmomente zwischen der Radnabe 10 und der Felge übertragen werden können. Wird somit beispielsweise die Radnabe 10 angetrieben, so wird dadurch das Rad angetrieben, wodurch das Kraftfahrzeug insgesamt angetrieben werden kann. Die Radnabe 10 wird somit zur drehbaren beziehungsweise drehenden Lagerung des Rads um die Drehachse 20 genutzt.

Um die Radnabe 10 anzutreiben, ist diese beispielsweise drehmomentübertragend mit einer in den Fig. nicht erkennbaren und beispielsweise als Gelenkwelle ausgebildeten Welle verbunden. Hierzu umfasst die Radnabe 10 beispielsweise eine auch als Nabenelement bezeichnete Nabe 24, welche durch einen geschlossenen Hohlquerschnitt der Radnabe 10 gebildet ist. Zumindest in einem Längenbereich der Nabe 24 weist die Radnabe 10 eine als Innenverzahnung ausgebildete Verzahnung 26 auf. Die genannte Welle weist beispielsweise eine mit der Verzahnung 26 korrespondierende und als Außenverzahnung ausgebildete weitere Verzahnung auf, in welche die Verzahnung 26 eingreift. Dadurch ist die Welle mit der Radnabe 10 drehmomentübertragend verbunden. Wird somit die Welle beispielsweise zumindest mittelbar von einem Antriebsmotor des Fahrzeugs angetrieben, so wird dadurch die Radnabe 10 von der Welle angetrieben und somit um die Drehachse 20, insbesondere relativ zu dem Radträger, gedreht. Die Nabe 24 wird durch einen auch als Träger oder Grundträger bezeichneten Fortsatz 28 der Radnabe 10 gebildet beziehungsweise begrenzt. Der Fortsatz 28 steht axial, das heißt in axialer Richtung der Radnabe 10 von dem Flansch 14 ab. Mit anderen Worten erstreckt sich der Fortsatz 28 in axialer Richtung von dem Flansch 14 weg und endet beispielsweise in axialer Richtung auf einer dem Flansch 14 gegenüberliegenden Seite 30 an einer Stirnfläche 32 des Fortsatzes 28. Die Stirnfläche 32 wird auch als Gesamtstirnfläche bezeichnet und ist an einem dem Flansch 14 in axialer Richtung gegenüberliegenden beziehungsweise abgewandten Ende 34 des Fortsatzes 28 angeordnet, welcher an dem Ende 34 endet.

Die Radnabe 10 weist darüber hinaus einen Zentriersitz 36 auf, welcher an dem Fortsatz 28 ausgebildet ist. Der Zentriersitz 36 umfasst mehrere, in Umfangsrichtung der Radnabe 10 aufeinander folgend angeordnete und voneinander beabstandete sowie in radialer Richtung der Radnabe 10 nach außen weisende Zentrierflächensegmente 40, mittels welchen die Felge in radialer Richtung der Radnabe 10 relativ zu der Radnabe 10 zu zentrieren ist. Die radialer Richtung der Radnabe 10 ist in Fig. 1 und 2 durch einen Doppelpfeil 38 veranschaulicht.

Das jeweilige Zentrierflächensegment 40 ist in radialer Richtung nach außen gewölbt und dabei kreisbogenförmig ausgebildet, wobei die Zentrierflächensegmente 40 auf demselben Durchmesser, insbesondere Außendurchmesser, angeordnet sind und dabei in radialer Richtung nach außen weisen. Der zuvor genannten Durchmesser wird auch als erster Durchmesser bezeichnet. Mittels des Zentriersitzes 36 ist die zuvor genannte Felge in radialer Richtung der Radnabe 10 relativ zu dieser zu zentrieren. Mit anderen Worten, um die Felge an der Radnabe 10 zu befestigen, wird - wie zuvor beschrieben - die Felge auf der Radnabe 10 angeordnet. Hierzu weist die Felge eine Nabe auf, welche auch als Felgennabe bezeichnet wird. Dabei wird die Felgennabe auf dem Zentriersitz 36 angeordnet, insbesondere derart, dass der Zentriersitz 36 und somit die Zentrierflächensegmente 40 in der Felgennabe angeordnet werden. Dabei wird die Felge, insbesondere eine innenumfangsseitige, die Felgennabe begrenzende Mantelfläche der Felge, in radialer Richtung nach innen hin an den Zentrierflächensegmenten 40 abgestützt beziehungsweise die Zentrierflächensegmente 40 werden in radialer Richtung nach außen hin an der innenumfangsseitigen Mantelfläche der Felge abgestützt. Hierdurch wird die Felge in radialer Richtung der Radnabe 10 relativ zu dieser positioniert und zentriert, insbesondere bezüglich der Drehachse 20, sodass die Radnabe 10 und die Felge bezüglich der Drehachse 20 koaxial zueinander angeordnet sind. Wird somit die Radnabe 10 angetrieben und um die Drehachse 20 gedreht, so wird dadurch auch die Felge beziehungsweise das Rad insgesamt um die Drehachse 20 gedreht.

Um nun einerseits eine besonders hohe Festigkeit und Dauerhaltbarkeit und andererseits ein möglichst geringes Gewicht der Radnabe 10 realisieren zu können, ist der Fortsatz 28 an sich einstückig ausgebildet. Des weiteren weist der Fortsatz 28 eine in Umfangsrichtung durchgängige und in radialer Richtung nach innen weisende Mantelinnenfläche 42 auf, welche auch als innenumfangsseitige Mantelfläche des Fortsatzes 28 bezeichnet wird und die Nabe 24 bildet beziehungsweise begrenzt. Bei dem in Fig. 1 und 2 veranschaulichten Ausführungsbeispiel ist die Mantelinnenfläche 42 zylindrisch ausgebildet. Des Weiteren weist der Fortsatz 28 eine in radialer Richtung nach außen weisende Mantelaußenfläche 44 auf, welche auch als außenumfangsseitige Mantelfläche des Fortsatzes 28 bezeichnet wird und die Zentrierflächensegmente 40 bildet. Die Mantelaußenfläche 44 ist nun derart ausgebildet beziehungsweise gestaltet, dass die Zentrierflächensegmente 40 einen ersten radialen Abstand zur Drehachse 20 aufweisen, und dass in Umfangsrichtung zwischen den Zentrierflächensegmenten 40 angeordnete weitere Flächensegmente 46 der Mantelaußenfläche 44 einen gegenüber dem ersten radialen Abstand geringeren zweiten radialen Abstand zur Drehachse 20 aufweisen. Die Zentrierflächensegmente 40 sind erste Teile der einstückigen und in Umfangsrichtung unterbrechungsfrei umlaufenden Mantelaußenfläche 44, wobei die weiteren Flächensegmente 46 zweite Teile der Mantelaußenfläche 44 sind. Die Teile ergeben in Summe die Mantelaußenfläche 44 und gehen unterbrechungsfrei und somit geschlossen beziehungsweise durchgängig ineinander über, insbesondere in Umfangsrichtung. Mit anderen Worten sind die Zentrierflächensegmente 40 Umfangsrichtung lückenlos beziehungsweise unterbrechungsfrei und somit vollständig durchgängig über die weiteren Flächensegmente 46 miteinander verbunden und mit den weiteren Flächensegmenten 46 verbunden, sodass die Teile in Umfangsrichtung der Radnabe 10 lückenlos beziehungsweise unterbrechungsfrei und somit vollständig geschlossen ineinander übergehen.

Dabei enden die Teile in axialer Richtung auf derselben axialen Höhe, sodass die Stirnfläche 32 eben ausgebildet ist und in einer Ebene verläuft, welche schräg oder vorliegend senkrecht zur Drehachse 20 beziehungsweise zur axialen Richtung verläuft. Die Stirnfläche 32 ist dabei eine in Umfangsrichtung vollständig geschlossen umlaufende Gesamtstirnfläche der Radnabe 10, insbesondere des Fortsatzes 28. Die Gesamtstirnfläche läuft bei dem gezeigten Ausführungsbeispiel auf der axialen Höhe, auf welcher die Teile in axialer Richtung enden, in Umfangsrichtung der Radnabe 10 vollständig geschlossen um. Da der Fortsatz einstückig und somit materialeinheitlich ausgebildet ist und die Teile der Mantelaußenfläche bildet, sind die Teile einstückig miteinander ausgebildet. Der Fortsatz 28 ist vorzugsweise einstückig mit dem Flansch 14 ausgebildet. Vorzugsweise ist der Fortsatz 28 und/oder der Flansch 14 aus einem metallischen Werkstoff gebildet.

Da sowohl die Mantelaußenfläche 44 als auch die Mantelinnenfläche 42, insbesondere über ihre jeweilige, vollständige, in axialer Richtung von dem Flansch 14 bis zu dem Ende 34 verlaufende axiale Länge in Umfangsrichtung durchgängig ausgebildet ist, hat der Fortsatz 28 eine geschlossene Form beziehungsweise ein geschlossenes Profil, sodass der zuvor genannte, die Nabe 24 bildende Hohlquerschnitt sowohl entlang seiner vollständigen axialen Erstreckung als auch in Umfangsrichtung vollständig geschlossen ist. Hierdurch können eine besonders hohe Festigkeit und Dauerhaltbarkeit realisiert werden. Außerdem endet der Fortsatz 28 in axialer Richtung an der Stirnfläche 32 und somit auf der Seite 30 an dem Ende 34.

Um trotz der durchgängigen beziehungsweise vollständig geschlossen umlaufenden Ausgestaltung der beispielsweise als Ringfläche oder Ringabschnitt ausgebildeten Stirnfläche 32 die Zentrierflächensegmente 40 in Umfangsrichtung voneinander zu beabstanden, sind die weiteren Flächensegmente 46 in radialer Richtung der Radnabe 10 nach innen hin gegenüber den Zentrierflächensegmenten 40 zurückversetzt. Außerdem sind beispielsweise die weiteren Flächensegmente 46 zumindest im Wesentlichen eben beziehungsweise flach ausgebildet, sodass sie in jeweiligen, gedachten Ebenen verlaufen, welche senkrecht zur axialen Richtung verlaufen beziehungsweise mit der axialen Richtung zusammenfallen.

In radialer Richtung nach innen hin weist der Fortsatz 28 die Mantelinnenfläche 42 auf, welche beispielsweise zylindrisch ausgebildet und dabei auf einem gegenüber dem ersten Durchmesser geringeren, zweiten Durchmesser, insbesondere Innendurchmesser, angeordnet ist. Die Nabe 24 ist somit zumindest im Bereich der genannten Teile der Mantelaußenfläche 44 innenumfangsseitig kreisförmig ausgebildet und dabei in Umfangsrichtung sowie in axialer Richtung vollständig geschlossen. Die jeweiligen Ebenen, in denen die weiteren Flächensegmente 46 verlaufen, tangieren beispielsweise einen dritten Durchmesser beziehungsweise einen gedachten, den dritten Durchmesser aufweisenden Kreis, wobei der dritte Durchmesser geringer als der erste Durchmesser und größer als der zweite Durchmesser ist. Hierdurch ist der Fortsatz 28 als geschlossenes Profil ausgebildet, sodass eine besonders hohe Festigkeit und Dauerhaltbarkeit der Radnabe 10 gewährleistet werden kann.

Bei dem in den Fig. veranschaulichten Ausführungsbespiel sind die Zentrierflächensegmente 40 beispielsweise in Umfangsrichtung versetzt zu den Befestigungselementen 16 angeordnet, sodass die Zentrierflächensegmente 40 in Umfangsrichtung zwischen den jeweiligen Öffnungen angeordnet sind. Alternativ dazu ist es denkbar, dass die jeweiligen Zentrierflächensegmente 40 in Umfangsrichtung auf derselben Höhe wie die jeweiligen Befestigungselemente 16 und somit in radialer Richtung genau unterhalb der Befestigungselemente 16 angeordnet sind.

Besonders gut ist aus Fig. 1 erkennbar, dass die Zentrierflächensegmente 40 in Summe eine Gesamtzentrierfläche zum Zentrieren der Felge bilden, wobei die Gesamtzentrierfläche in Umfangsrichtung der Radnabe 10 aufgeteilt und dadurch in die Zentrierflächensegmente 40 unterteilt ist. Die Zentrierflächensegmente 40 sind somit Segmente der Gesamtzentrierfläche und somit des Zentriersitzes 36. Durch die beschriebene Beabstandung der Zentrierflächensegmente 40 ist der Zentriersitz 36 segmentiert, wobei die beschriebene Segmentierung des Zentriersitzes 36 auch als radiale Segmentierung bezeichnet wird. Durch diese radiale Segmentierung kann die Radnabe 10 mit einem nur geringen Materialaufwand hergestellt werden, sodass das Gewicht der Radnabe 10 besonders gering gehalten werden kann. Gleichzeitig können eine besonders hohe Festigkeit und Dauerhaltbarkeit realisiert werden, da in Umfangsrichtung zwischen den Segmenten nicht etwa Lücken beziehungsweise Unterbrechungen vorgesehen sind, sondern die Segmente sind wie beschriebenen miteinander verbunden, wodurch die umlaufend vollständig geschlossene Stirnfläche 32 gebildet ist.

Die weiteren Flächensegmente 46, insbesondere deren Zurückversetzung, sind beispielsweise durch Materialausnehmungen gebildet. Die jeweilige Materialausnehmung wird beispielsweise durch Bearbeiten, insbesondere durch mechanisches Bearbeiten, und somit durch Materialwegnahme gebildet. Darunter ist beispielsweise zu verstehen, dass das Rohteil 12 zunächst im Bereich des jeweiligen, noch herzustellenden Flächensegments 46 Material aufweist, welches jedoch zum Herstellen des jeweiligen Flächensegmentes 46 entfernt, insbesondere abgetragen, wird. Das Material wird beispielsweise durch Bearbeiten, insbesondere durch mechanisches Bearbeiten wie beispielsweise Fräsen, abgetragen. Alternativ ist es denkbar, dass das jeweilige Flächensegment 46 und somit die Zurückversetzung durch Auslassen von Material und somit beispielsweise bereits durch Urformen, insbesondere durch Schmieden, gebildet werden, insbesondere ohne sich an das Schmieden anschließende Bearbeitungsprozesse. Hierdurch kann die Radnabe 10 besonders gewichts- und kostengünstig hergestellt werden.

Der Fortsatz 28 erstreckt sich auf einer ersten Seite des Flansches 14 in axialer Richtung von diesem weg. Auf einer der ersten Seite des Flansches 14 in axialer Richtung der Radnabe 10 gegenüberliegenden zweiten Seite des Flansches 14 erstreckt sich ein auch als Längenbereich bezeichneter Teilbereich 48 in axialer Richtung von dem Flansch 14 weg, wobei der Teilbereich 48 beispielsweise einstückig mit dem Fortsatz 28 ausgebildet ist beziehungsweise durch den Fortsatz 28 gebildet wird. Insbesondere ist der Teilbereich 48 außenumfangsseitig zumindest im Wesentlichen kreis- beziehungsweise zylinderförmig ausgebildet. Somit ist beispielsweise der Teilbereich 48 außenumfangsseitig als Rohr ausgebildet. Die Verzahnung 26 kann zumindest teilweise, insbesondere zumindest überwiegend oder vollständig, in dem Teilbereich 48 angeordnet sein. Insbesondere über den Teilbereich 48 kann die Radnabe 10 drehbar an dem Radträger gelagert werden, da beispielsweise das zuvor genannte, insbesondere als Wälzlager ausgebildete Radlager an dem Teilbereich 48 abstützbar beziehungsweise abgestützt ist.

## Patentansprüche

1. Radnabe (10) zur drehenden Lagerung eines Rads eines Fahrzeugs um eine Drehachse (20), mit einem Flansch (14), welcher wenigstens ein Befestigungselement (16) aufweist, mittels welchem eine Felge des Rads zumindest in axialer Richtung (22) der Radnabe (10) an dem Flansch (14) und dadurch an der Radnabe (10) befestigbar ist, und mit einem an einem axial von dem Flansch (14) abstehenden Fortsatz (28) der Radnabe (10) ausgebildeten Zentriersitz (36), welcher mehrere, in Umfangsrichtung (18) der Radnabe (10) aufeinanderfolgend angeordnete und voneinander beabstandete sowie in radialer Richtung (38) der Radnabe (10) nach außen weisende Zentrierflächensegmente (40) aufweist, mittels welchen die Felge in radialer Richtung (38) der Radnabe (10) relativ zu dieser zu zentrieren ist, wobei der einstückige Fortsatz (28) eine in Umfangsrichtung (18) durchgängige und in radialer Richtung nach innen weisende Mantelinnenfläche (42) und eine in radialer Richtung (38) nach außen weisende und die Zentrierflächensegmente (40) bildende Mantelaußenfläche (44) aufweist, welche derart gestaltet ist, dass die Zentrierflächensegmente (40) einen ersten radialen Abstand zur Drehachse (20) aufweisen und in Umfangsrichtung zwischen den Zentrierflächensegmenten (40) angeordnete weitere Flächensegmente (46) der Mantelaußenfläche (44) einen gegenüber dem ersten radialen Abstand geringeren zweiten radialen Abstand zur Drehachse (20) aufweisen,
**dadurch gekennzeichnet, dass**
die weiteren Flächensegmente (46) der Mantelaußenfläche (44) eben ausgebildet und gegenüber den Zentrierflächensegmenten (40) radial näher zur Drehachse (20) zurückversetzt sind.

2. Radnabe (10) nach Anspruch 1,
**dadurch gekennzeichnet, dass**
sich die in Umfangsrichtung (18) durchgängige Mantelinnenfläche (42) in axialer Richtung von dem Flansch (14) durchgängig bis zu einem dem Flansch (14) in axialer Richtung gegenüberliegenden Ende (34) des Fortsatzes (28) erstreckt.

3. Radnabe (10) nach Anspruch 1 oder 2,
**dadurch gekennzeichnet, dass**
der Fortsatz (28) in axialer Richtung (22) auf einer dem Flansch (14) gegenüberliegenden Seite (30) an einer Stirnfläche (32) endet.

4. Radnabe (10) nach Anspruch 3,
**dadurch gekennzeichnet, dass**
die Stirnfläche (32) eben ausgebildet ist und sich in einer schräg oder senkrecht zur axialen Richtung (22) verlaufenden Ebene erstreckt.

5. Radnabe (10) nach einem der vorhergehenden Ansprüche,
**dadurch gekennzeichnet, dass**
die weiteren Flächensegmente (46) durch mechanisches Bearbeiten gebildet und zurückversetzt sind.

6. Radnabe (10) nach einem der Ansprüche 1 bis 4,
**dadurch gekennzeichnet, dass**
die weiteren Flächensegmente (46) durch Urformen gebildet und zurückversetzt sind.

7. Radnabe (10) nach einem der vorhergehenden Ansprüche,
**dadurch gekennzeichnet, dass**
die Zentrierflächensegmente (40) in Umfangsrichtung (18) versetzt zu dem Befestigungselement (16) angeordnet sind.

8. Radlagereinheit, mit einer in die Radlagereinheit integrierten Radnabe (10) nach einem der vorhergehenden Ansprüche.

9. Fahrzeug, mit wenigstens einer Radnabe (10) nach einem der Ansprüche 1 bis 7 und/oder mit wenigstens einer Radlagereinheit nach Anspruch 8.

## Claims

1. Wheel hub (10) for mounting a wheel of a vehicle so as to rotate about an axis of rotation (20), having a flange (14), which has at least one fastening element (16), by means of which a rim of the wheel can be fastened at least in the axial direction (22) of the wheel hub (10) to the flange (14) and thereby to the wheel hub (10), and having a centring seat (36) formed on an extension (28) of the wheel hub (10) projecting axially from the flange (14), which centring seat (36) has a plurality of centring surface segments (40), which are arranged one after the other in the circumferential direction (18) of the wheel hub (10) and are spaced apart from each other and which point outwards in the radial direction (38) of the wheel hub (10), by means of which the rim is to be centred in the radial direction (38) of the wheel hub (10) relative to the latter, wherein the integral extension (28) has an inner lateral face (42), which is continuous in the circumferential direction (18) and points inwards in the radial direction (38) and an outer lateral face (44), which points outwards in the radial direction (38) and forms the centring surface segments (40), which is designed such that the centring surface segments (40) have a first radial distance from the axis of rotation (20) and further surface segments (46) of the outer lateral face (44) arranged in a circumferential direction between the centring surface segments (40) have a lower second radial distance from the axis of rotation (20) compared to the first radial distance,
**characterised in that**
the further surface segments (46) of the outer lateral face (44) are formed flat and are offset relative to the centring surface segments (40) radially closer to the axis of rotation (20).

2. Wheel hub (10) according to claim 1,
**characterised in that**
the continuous inner lateral face (42) in the circumferential direction (18) extends continuously in the axial direction from the flange (14) to an end (34) of the extension (28) opposite the flange (14) in the axial direction.

3. Wheel hub (10) according to claim 1 or 2,
**characterised in that**
the extension (28) in the axial direction (22) terminates on a side (30) opposite the flange (14) at an end surface (32).

4. Wheel hub (10) according to claim 3,
**characterised in that**
the end surface (32) is formed flat and extends in a plane extending diagonally or perpendicular to the axial direction (22).

5. Wheel hub ( 10) according to any of the preceding claims,
**characterised in that**
the further surface segments (46) are formed by mechanical processing and are offset.

6. Wheel hub (10) according to any of claims 1 to 4,
**characterised in that**
the further surface segments (46) are formed by casting and are offset.

7. Wheel hub ( 10) according to any of the preceding claims,
**characterised in that**
the centring surface segments (40) are arranged offset in the circumferential direction (18) to the fastening element (16).

8. Wheel bearing unit, having a wheel hub (10) integrated into the wheel bearing unit according to any of the preceding claims.

9. Vehicle having at least one wheel hub (10) according to any of claims 1 to 7 and/or having at least one wheel bearing unit according to claim 8.

## Revendications

1. Moyeu de roue (10) pour le montage rotatif d'une roue d'un véhicule autour d'un axe de rotation (20), avec un flasque (14) qui présente au moins un élément de fixation (16) au moyen duquel une jante de la roue peut être fixée au moins dans la direction axiale (22) du moyeu de roue (10) sur le flasque (14) et ainsi sur le moyeu de roue (10), et avec un siège de centrage (36) réalisé sur un prolongement (28) du moyeu de roue (10) dépassant axialement du flasque (14), qui présente plusieurs segments de surface de centrage (40) disposés les uns à la suite des autres dans la direction circonférentielle (18) du moyeu de roue (10) et espacés les uns des autres ainsi que dirigés vers l'extérieur dans la direction radiale (38) du moyeu de roue (10), au moyen desquels la jante peut être centrée dans la direction radiale (38) du moyeu de roue (10) par rapport à celui-ci, dans lequel le prolongement (28) d'une pièce d'un seul tenant présente une surface intérieure d'enveloppe (42) continue dans la direction circonférentielle (18) et orientée vers l'intérieur dans la direction radiale et une surface extérieure d'enveloppe (44) orientée vers l'extérieur dans la direction radiale (38) et formant les segments de surface de centrage (40), laquelle est configurée de sorte que les segments de surface de centrage (40) présentent une première distance radiale par rapport à l'axe de rotation (20) et que d'autres segments de surface (46) de la surface extérieure d'enveloppe (44) disposés dans la direction circonférentielle entre les segments de surface de centrage (40) présentent une seconde distance radiale par rapport à l'axe de rotation (20), inférieure à la première distance radiale,
**caractérisé en ce**
**que** les autres segments de surface (46) de la surface extérieure d'enveloppe (44) sont réalisés de manière plane et sont radialement en retrait par rapport aux segments de surface de centrage (40) plus près de l'axe de rotation (20).

2. Moyeu de roue (10) selon la revendication 1,
**caractérisé en ce**
**que** la surface intérieure d'enveloppe (42) continue dans la direction circonférentielle (18) s'étend dans la direction axiale de manière continue depuis le flasque (14) jusqu'à une extrémité (34) du prolongement (28) opposée au flasque (14) dans la direction axiale.

3. Moyeu de roue (10) selon la revendication 1 ou 2,
**caractérisé en ce**
**que** le prolongement (28) se termine dans la direction axiale (22) par une surface frontale (32) sur un côté (30) opposé au flasque (14).

4. Moyeu de roue (10) selon la revendication 3,
**caractérisé en ce**
**que** la surface frontale (32) est réalisée de manière plane et s'étend dans un plan incliné ou perpendiculaire à la direction axiale (22).

5. Moyeu de roue (10) selon l'une quelconque des revendications précédentes,
**caractérisé en ce**
**que** les autres segments de surface (46) sont formés par usinage mécanique et sont en retrait.

6. Moyeu de roue (10) selon l'une quelconque des revendications 1 à 4,
**caractérisé en ce**
**que** les autres segments de surface (46) sont formés par formage primaire et sont en retrait.

7. Moyeu de roue (10) selon l'une quelconque des revendications précédentes,
**caractérisé en ce**
**que** les segments de surface de centrage (40) sont décalés dans la direction circonférentielle (18) par rapport à l'élément de fixation (16).

8. Unité de roulement de roue, avec un moyeu de roue (10) intégré dans l'unité de roulement de roue selon l'une quelconque des revendications précédentes.

9. Véhicule avec au moins un moyeu de roue (10) selon l'une quelconque des revendications 1 à 7 et/ou avec au moins une unité de roulement de roue selon la revendication 8.
